# EUROPÄISCHE PATENTSCHRIFT

(11) **EP 0 307 344 B1**
(45) Veröffentlichungstag und Bekanntmachung des Hinweises auf die Patenterteilung: **02.06.1993**
(21) Anmeldenummer: 88730195.0
(22) Anmeldetag: 31.08.1988
(51) Int. Cl.: B60R 16/02

(54) **Bordnetz für Kraftfahrzeuge und Verfahren zum Betrieb des Bordnetzes**
Wiring for motor vehicles, and process for operating it
Réseau de distribution électrique pour véhicule et son procédé de commande

(30) Priorität: 08.09.1987 DE 3730468
(43) Veröffentlichungstag der Anmeldung: 15.03.1989
(73) Patentinhaber: SIEMENS AKTIENGESELLSCHAFT, 80333 München (DE)
(72) Erfinder: Möller, Antonius, Dipl.-Ing., D-2870 Delmenhorst (DE); Reimann, Herbert, Dipl.-Ing., D-2900 Oldenburg (DE); Schürmann, Bernhard, Dr., D-2880 Brake (DE); Wilts, Gerold, Dipl.-Ing., D-2882 Ovelgoenne 1 (DE)

(56) Entgegenhaltungen:
- EP-A- 0 011 313
- EP-A- 0 143 649
- EP-A- 0 190 697
- EP-A- 0 194 915
- DE-A- 2 451 412
- FR-A- 2 353 412
- NACHRICHTENTECHNISCHE ZEITSCHRIFT N.T.Z., Band 24, Nr. 7, Juli 1971, Seiten 385-389, Berlin, DE; N. BUDNIK: "Ein Impuls-Fernwirksystem für Anwendungen in Nachrichtenanlagen"
- TECHN. MITT. AEG-TELEFUNKEN, Band 66, nr. 2/3, Februar/März 1976, Seiten 120-124, Berlin, DE; P. LANGER: "Geatrans 2100, ein flexibles und leistungsfähiges Fernwirksystem mit integrierten Prozessrechnern"

## Beschreibung

Die Erfindung liegt auf dem Gebiet der Bordnetze für Kraftfahrzeuge und ist bei der Ausgestaltung eines Bornetzes anzuwenden, das mit einer Multiplex-Steuerung zum Schalten, Steuern und Überwachen elektrischer Endeinrichtungen versehen ist.

Durch die technische Entwicklung der Kraftfahrzeuge sind in den letzten Jahren die Funktionalität der Aggregate, die Bedienungsfreundlichkeit und der Komfort wesentlich verbessert worden. Damit verbunden ist eine umfangreiche Erweiterung der elektrischen Ausrüstung. Zum Verbinden der einzelnen Schalter und Aggregate werden Leitungssätze verwendet, die mitunter Leitungslängen von mehr als 500 m und über 1000 elektrische Steckverbindungen enthalten. Diese sehr komplex gestalteten Leitungssätze sind anfällig für Fertigungsfehler, da die Erstellung eines Leitungssatzes überwiegend in manueller Tätigkeit erfolgt, sie sind mitunter schwierig zu installieren und sind auch für Reparaturzwecke schwer zugänglich. Man hat daher bereits vorgesehen, den Leitungssatz eines Kraftfahrzeuges durch ein Bordnetz zu ersetzen, bei dem insbesondere die im peripheren Karosseriebereich angeordneten verschiedenen Endeinrichtungen wie Bedienelemente, Sensoren und Verbraucher (Anzeigeelemente, Lampen, Heizelemente, Motoren, Aktoren) durch eine Multiplex-Steuerung miteinander verbunden sind, die einem Energieversorgungssystem überlagert ist. Diese bekannten Bordnetze bestehen aus entsprechenden Signalleitungen und elektronischen/elektrischen Baugruppen, die an zahlreichen Stellen im Auto untergebracht sind und die Signale erfassen oder ausgeben und auch elektrische Verbraucher direkt ein- oder ausschalten. Diese Baugruppen sind über Signalleitungen und Signalumsetzer, Sender, Empfänger und Steuerungseinrichtungen miteinander verbunden. Die Anordnung und die Verbindung der Baugruppen untereinander basiert dabei auf einer Bus- oder Ring- oder auch Stern-Topologie. Bei Bordnetzen, die aus einer Busleitung, aus mehreren an die Busleitung angeschlossenen Busteilnehmerstationen und aus den Busteilnehmerstationen zugeordneten peripheren Endeinrichtungen bestehen, sind die Busteilnehmerstationen zur Kommunikation untereinander mit Sendern und Empfängern zum Austausch von Datensignalen ausgestattet. Die bekannten Bordnetze enthalten in aller Regel eine Mulitplex-Steuerung und arbeiten zum Schalten, Steuern und Überwachen der elektrischen Endeinrichtungen häufig mittels asynchroner Signalübertragung und mit zufälligem Buszugriff. Jede Busteilnehmerstation enthält eine Einrichtung zur Auflösung von Konflikten bei gleichzeitigem Zugriff mehrerer Busteilnehmerstationen auf die Busleitung.

Einschlägiger Stand der Technik wird bespielsweise durch folgende Fundstellen repräsentiert:
DE-A- 24 33 025
DE-A- 29 09 213
DE-A- 31 49 142
DE-A- 33 35 932
DE-A- 34 17 956
DE-A- 34 29 941
DE-A- 35 22 907
DE-A- 35 35 860
DE-A- 35 45 293
EP-A 0 008 238
EP-A 0 014 556
EP-A 0 023 105
Aufsatz "Proposal for an automotive multiplex wiringsystem", Nr. C 205/85 in IMechE 1985, Seite 227 bis 230,
Aufsatz "Systems considerations for incorporating vehicle data networks (multiplex) into automobiles", Nr. C 218/85 in IMechE 1985, Seite 209 bis 216,
SAE Technical Papers Series No. 860389 "Crysler Collision Detection (C²D) - A Revolutionary Vehicle Network".
Bei diesen bekannten Bordnetzen kann leicht ein vollständiger Systemausfall aufgrund von Fehlern in der Übertragungsleitung (bei Bus- und Ring-Konzepten) oder aufgrund des Ausfalls der Zentralstation (bei Stern-Konzepten) auftreten.

Ausgehend von einem Bordnetz für Kraftfahrzeuge mit den Merkmalen des Oberbegriffes des Patentanspruches 1 liegt der Erfindung die Aufgabe zugrunde, die Ausgestaltung des Bordnetzes derart zu verbessern, daß es an unterschiedliche Bedürfnisse flexibel anpaßbar ist, daß seine Zuverlässigkeit derart verbessert ist, daß Ausfälle in Teilbereichen, wie sie beispielsweise bei Unfällen auftreten können, nur geringe Auswirkungen auf das Gesamtsystem haben.

Zur Lösung dieser Aufgabe ist gemäß der Erfindung vorgesehen, daß zwischen den Busteilnehmerstationen und den peripheren Endeinrichtungen Schnittstelleneinrichtungen angeordnet sind, wobei jeweils mehrere Endeinrichtungen sternförmig einer Schnittstelleneinrichtung zugeordnet sind und jeweils eine oder mehrere Schnittstelleneinrichtungen ebenfalls sternförmig über jeweils eine Signalleitung einer Busteilnehmerstation zugeordnet sind,
daß jede Schnittstelleneinrichtung mit Signalsumsetzern zur Erfassung binärer oder analoger Signalwerte der Endeinrichtungen und zur Ausgabe binärer und/oder analoger Signalwerte an die Endeinrichtungen versehen ist und daß jede Schnittstelleneinrichtung mit einem Sender und Empfänger zum Austausch von Daten mit der zugehörigen Busteilnehmerstation und jede Busteilnehmerstation mit Sendern und Empfängern zum Austausch von Daten mit den zugehörigen Schnittstelleneinrichtungen über jeweils eine Signalleitung versehen ist.

Die Grundstruktur eines derart ausgestalteten Bordnetzes ist durch eine hybride Topologie gekennzeichnet, da eine Bus-Topologie und eine Stern-Topologie miteinander kombiniert sind. Diese hybride Topologie führt zu einer hohen Modularität des Bordnetzes, d. h. es ist sehr einfach an unterschiedliche Anforderungen anpaßbar und auch ohne Einschränkungen in verschiedenen Stufen beliebig erweiterbar, wobei jeweils nur ein für die spezielle Anpassung oder Erweiterung erforderlicher technischer Aufwand zu investieren ist: durch Verwendung der Stern-Topologie im Bereich der Schnittstelleneinrichtungen und der Endeinrichtungen liegen in diesem Bereich Teilsysteme vor, die weitestgehend unabhängig voneinander sind und insbesondere einzelnen Teilbereichen im Kraffahrzeug, beispielsweise dem gesamten oder nur dem rechten, linken oder mittleren Heckbereich, den Türen, den Sitzen, der Klimaanlage, dem Armaturenbrett und/oder der Mittelkonsole mit den Bedien- und Anzeigeelementen sowie dem Frontbereich usw., also den peripheren Karosseriebereichen zugeordnet werden können. Diese Bereiche mit einer oder mehreren zugeordneten Schnittstelleneinrichtungen und den zugehörigen Endeinrichtungen können weiterhin über die ihnen zugeordnete Busteilnehmerstation und die Busleitung leicht miteinander gekoppelt werden, bis hin zu einem vollständig mit einem Mulitiplex-System ausgerüsteten Fahrzeug. Zusätzliche Busteilnehmerstationen können im übrigen einfach an die vorhandene Busleitung angekoppelt werden und erhalten damit direkten Zugang zu allen aus dem Karosseriebereich vorliegenden Daten.

Durch die hybride Topologie des Bordnetzes wird die Zuverlässigkeit des Systems wesentlich erhöht, da Ausfälle einzelner Endeinrichtungen den Informationsfluß im übrigen Teil des Bordnetzes nicht beeinträchtigen und Ausfälle von Schnittstelleneinrichtungen oder auch einer Busteilnehmerstation auf den lokal betroffenen Bereich beschränkt bleiben; die Realisierung dieses Bordnetzes ist mit geringem Aufwand möglich, da für die häufig einzusetzenden Schnittstelleneinrichtungen einfache Elektronikbaugruppen, insbesondere einfache Mikrokontrolerbausteine, verwendet werden können, während lediglich die Busteilnehmerstationen mit leistungsfähigeren Mikroprozessor- und Speicherbausteinen ausgerüstet sind.

Die relativ wenigen an die Busleitung angeschlossenen Busteilnehmerstationen organisieren und wickeln den Datenverkehr auf der Busleitung selbständig ab. Dabei wird zweckmäßig von der bekannten "Wired-and" verknüpften Ankopplung von Busteilnehmerstationen Gebrauch gemacht. Da die logische Verarbeitung und Verknüpfung der Signale in den Busteilnehmerstationen erfolgt, ist für diese Teile des Bordnetzes eine hohe Verarbeitungsleistung und damit eine relativ hochwertige elektronische Ausrüstung erforderlich. Es empfiehlt sich daher, diese Teile des Bordnetzes zusammen mit der Busleitung in demjenigen Teil des Kraftfahrzeuges anzuordnen, der im allgemeinen bei Unfällen weitestgehend unbeschädigt bleibt. Insbesondere bei Kraftfahrzeugen mit einer formsteifen Zone und mit leichter verformbaren Zonen und mit im Bereich der Karosserie und des Fahrzeugbodens angeordneten peripheren Endeinrichtungen sind daher die Busleitung und die Busteilnehmerstationen zweckmäßig im Bereich der Kfz-Längsachse innherhalb der formsteifen Zone angeordnet, während sich die Schnittstelleneinrichtungen im Bereich der Karosserie bzw. des Fahrzeugbodens befinden.

Das neue modulare Bordnetz mit hybrider Topologie bietet die Möglichkeit, die zum Schalten, Steuern und Überwachen der Endeinrichtungen erforderlichen Baugruppen so auf die Busteilnehmerstationen und die Schnittstelleneinrichtungen aufzuteilen, daß nur in den Busteilnehmerstationen eine hohe Verarbeitungsleistung erforderlich ist, so daß jede Busteilnehmerstation eine lokale Zentrale für die zugeordneten Schnittstelleneinrichtungen bildet; es hat sich als zweckmäßig erwiesen, einer Busteilnehmerstation maximal drei Schnittstelleneinrichtungen zuzuordnen. Dabei empfiehlt es sich, daß jede Schnittstelleneinrichtung einen Datenaufbereiter zur Vor- und Nachbearbeitung der von der zugehörigen Busteilnehmerstation zu empfangenden oder an die zugehörige Busteilnehmerstation weiterzugebenden Signale aufweist. Dadurch wird die Busteilnehmerstation von einer Vielzahl von Aufgaben entlastet, die der Signalaufbereitung, der Signalumsetzung (analog/digital und umgekehrt) oder der Fehlerüberwachung dienen; außerdem wird die Verarbeitungsleistung der Schnittstelleneinrichtungen optimal genutzt.

Die Funktion einer Busteilnehmerstation als lokale Zentrale für die nachgeordneten Schnittstelleneinrichtungen kann dadurch weiter hervorgehoben werden, daß die den Endeinrichtungen zugeordneten Eingänge bzw. Ausgänge der Schnittstelleneinrichtungen jeweils zu einer oder mehreren Gruppen gleichen Typs zusammengefaßt sind und daß jede Busteilnehmerstation (2) eine Steuereinrichtung zur zyklischen Übertragung der Daten von und zu den zugehörigen Schnittstelleneinrichtungen in der Reihenfolge der Gruppen von Ein- und Ausgängen der jeweiligen Schnittstelleneinrichtung enthält.

Da in den Schnittstelleneinrichtungen nur einfache Datenaufbereiter zur Vor- und Nachbearbeitung der Signale erforderlich sind, kann die Datenübertragung zwischen den Schnittstelleneinrichtungen und der zugehörigen Busteilnehmerstation seriell mit einer geringen Übertragungsrate erfolgen. Die Schnittstelleneinrichtungen sind zweckmäßig so ausgelegt, daß mit ihnen jeweils maximal 24 digitale Ein-/Ausgänge oder 16 digitale und 8 analoge Ein-/Ausgänge bedient werden können. An diese Ein-/Ausgänge sind Endeinrichtungen entweder direkt über konventionelle Leitungen angeschlossen oder eine Schnittstelleneinrichtung und mehrere zusammengehörige Endeinrichtungen werden gemeinsam in einem Gehäuse angeordnet.

Für den Fall, daß im Bereich einer Busteilnehmerstation nur wenige Endeinrichtungen angeordnet sind oder sich eine oder mehrere Endeinrichtungen in unmittelbarer Nähe der Busteilnehmerstation befinden, ist es zweckmäßig, daß eine oder mehrere Busteilnehmerstationen zusätzlich einen Signalumsetzer zum direkten Erfassen oder zur direkten Ausgabe von binären und/oder analogen Signalwerten sowie einen Datenaufbereiter aufweisen. In diesem Fall können die wenigen Endeinrichtungen direkt an die Busteilnehmerstation angeschlossen werden.

Der modulare Aufbau des neuen Bordnetzes kann dadurch weiter verbessert werden, daß jede Busteilnehmerstation einen Adressenumsetzer zur logischen Umsetzung der lokalen oder auch baugruppenspezifischen Adressen der Endeinrichtungen in globale, funktionsorientierte Adressen und umgekehrt enthält. Dadurch ist gewährleistet, daß bei einer hardwaremäßigen Erweiterung des Bordnetzes die zusätzlichen Baugruppen keine oder nur wenige Informationen über die aktuelle Struktur des Bordnetzes benötigen, und die elektrischen Funktionen der durch die neuen Baugruppen repräsentierten Endeinrichtungen können problemlos in das Bordnetz aufgenommen und verarbeitet werden. Die Adressenumsetzer gewährleisten dabei eine einheitliche "Sprache" auf der Busleitung, die von allen Busteilnehmerstationen verstanden und interpretiert werden kann. Mittels der Adressenumsetzer erfolgt eine funktionsorientierte Klassifizierung der Endeinrichtungen, wie z. B. "Tür", "Beleuchtung" oder "Sitz", im Gegensatz zu einer bisher üblichen baugruppenspezifischen Kennzeichnung von Signalen, die beispielsweise aus der Position innerhalb einer Gruppe, der Gruppennummer, der Nummer der Schnittstelleneinrichtung und der Nummer der Busteilnehmerstation bestehen müßte. Die damit gegebene eindeutige Zuordnung der Signale der Endeinrichtungen bietet ebenfalls Raum für spätere Erweiterungen des Bordnetzes. Durch diese Art der Umsetzung der lokalen Adressen der Endeinrichtungen in globale funktionsorientierte Adressen und umgekehrt lassen sich bei Änderung der Zuordnung von Endeinrichtungen zu bestimmten Schnittstelleneinrichtungen auch Rückwirkungen auf nichtbeteiligte Baugruppen vermeiden, die anderenfalls bei der Verwendung baugruppenspezifischer oder physikalischer Adressen auf der Busleitung auftreten könnten.

Die erfindungsgemäße Ausgestaltung des Bordnetzes, die zunächst nur der vereinfachten Übertragung von Schaltinformationen dient, kann auch dazu verwendet werden, bestimmte Schaltzustände der Endeinrichtungen miteinander logisch zu verknüpfen, gegebenenfalls unter Berücksichtigung von Zeitbedingungen. Dadurch können konventionelle Relaisschaltungen und einfache Elektronikbaugruppen ersetzt werden. In Weiterbildung der Erfindung ist daher vorgesehen, daß die Busteilnehmerstationen auch Steuerungs- und/oder Verknüpfungselemente enthalten, mit denen binäre und/oder digitale Daten beliebiger Endeinrichtungen logisch miteinander verknüpfbar sind. - Die einfache und systematische Realisierung der Steuerungs- und Verknüpfungsfunktionen erfordert eine einheitliche, normierte Signalrepräsentation innerhalb des Bordnetzes, um eine Verarbeitung unabhängig vom physikalischen Ursprung der Signale vornehmen zu können. Durch eine Klassifizierung der im Kraftfahrzeug am häufigsten vorkommenden Eingabeelemente, wie Schalter (Ein-/Aus-Schalter, Um-Schalter, Stufen-Schalter, Mehrfach-Schalter) und analoger Geber kann die Anzahl unterschiedlicher Funktionen zur Aufbereitung der Eingangssignale wesentlich eingeschränkt werden, so daß eine systematische Signalaufbereitung möglich ist. Die Übertragung der so aufbereiteten Daten über die Busleitung zu einer anderen Busteilnehmerstation und die Aufbereitung der übertragenen Daten in der empfangenden Busteilnehmerstation mittels Hilfsfunktionen, die den erwähnten Eingangsfunktionen direkt zugeordnet sind, dienen zur Bereitstellung derjenigen Informationen über Endeinrichtungen, die schließlich mit einer Reihe von allgemeinen Grundoperationen weiter verarbeitet werden können. - Die mittels der Steuerungs-und/oder Verknüpfungselemente durchzuführenden Verknüpfungen umfassen logische Operationen auf binäre Zustände, Zeit-, Zähl- und Speicherfunktionen sowie Vergleichsoperationen digitaler oder digitalisierter analoger Werte. Durch geeignete Kombination und mehrfache Anwendung dieser Grundoperationen lassen sich der größte Teil der notwendigen Verknüpfungen zum Schalten und Steuern oder auch für einfache Regelungen realisieren. Signalverknüpfungen, die auf diese Weise nicht darstellbar sind, können durch spezielle Softwarebausteine abgedeckt werden.

Im Zusammenhang mit der logischen Verknüpfung von Signalen der Endeinrichtungen übernehmen die einzelnen Schnittstelleneinrichtungen lediglich die direkte Ausgabe binärer Signale mit oder ohne Überwachung des tatsächlichen Schaltzustandes und die Ausgabe analoger Signalwerte über pulsweitenmodulierte Ausgänge, indem die interne Signaldarstellung (digital) durch Signalumsetzer in die notwendige physikalische Form umgewandelt wird. Es besteht aber auch die Möglichkeit, durch die Rückführung analoger Signale von den Endeinrichtungen lokale Regelkreise in einer Schnittstelleneinrichtung aufzubauen.

Der Betrieb des erfindungsgemäßen Bordnetzes erfolgt zweckmäßig unter Benutzung eines Zeitmultiplexverfahrens mittels asynchroner Signalübertragung und zufälligem Zugriff der Busteilnehmerstationen zur Busleitung. Die Datenübertragung von den Busteilnehmerstationen zu den Schnittstelleneinrichtungen wird mit Vorteil zyklisch vorgenommen, wodurch eine regelmäßige Aktualisierung der Signalwerte gewährleistet ist. Dabei arbeitet die jeweilige Busteilnehmerstation als sogenannter Master, der den Datenverkehr zu den Schnittstelleneinrichtungen organisiert. Damit jedoch innerhalb des Bordnetzes schnell auf Signaländerungen an den Endeinrichtungen oder auf erkannte Fehler reagiert werden kann, ist es zweckmäßig, zur Übermittlung eines zeitkritischen Datums an die zugehörige Busteilnehmerstation jeder Schnittstelleneinrichtung die Möglichkeit zu geben, an vorbestimmten Stellen des Übertragungszyklus ein Signal abzugeben, das zur Unterbrechung des Übertragungszyklus führt, um die zeitkritischen Daten zu übertragen.

Um in dem erfindungsgemäß ausgebildeten Bordnetz, insbesondere im Hinblick auf die mittels der Verknüpfungs- und Steuerungselemente erfolgenden logischen Verknüpfungen eine jederzeit einheitliche Datenbasis in den Busteilnehmerstationen zu gewährleisten und um auch Fehler in den Busteilnehmerstationen kurzzeitig erkennen zu können, empfiehlt es sich weiterhin, parallel zum normalen Datenverkehr auf der Busleitung - bei dem jeweils bei Änderung eines Signalzustandes, der sich aus dem aktuellen Signalwert und Fehlerinformationen einer Endeinrichtung zusammensetzt, eine Übertragung zu anderen Busteilnehmerstationen erfolgt - den in den einzelnen Busteilnehmerstationen gespeicherten Zustand der Endeinrichtungen zyklisch zu aktualisieren, sobald die Belastung der Busleitung dies zuläßt. Damit ist sichergestellt, daß bei der Steuerung und/oder Verknüpfung von Signalwerten in den verschiedenen Busteilnehmerstationen jeweils identische Daten herangezogen werden und bisher unentdeckte Fehler aufgespürt werden können.

Zum vollständigen Betrieb des erfindungsgemäßen Bordnetzes sind neben der Busleitung und den Signalleitungen auch Energieleitungen erforderlich, über die den Endeinrichtungen die erforderliche Energie zugeführt wird. Es empfiehlt sich, aus Gründen einer einfachen Installation im Kraftfahrzeug diese Energieleitungen parallel zu der Busleitung und den Signalleitungen (bei denen es sich um elektrische oder optische Leitungen handeln kann) zu verlegen bzw. eine geeignete mehradrige Leitung zu verwenden. Beispielsweise könnten dann an den Busteilnehmerstationen jeweils Gruppen von Endeinrichtungen, die an eine Schnittstelleneinrichtung angeschlossen sind, elektrisch durch konventionelle Schmelzsicherungen abgesichert werden.

Ein Ausführungsbeispiel des neuen Bordnetzes ist in den Figuren 1 bis 5 dargestellt. Dabei zeigt
Fig. 1 schematisch die Grundstruktur des neuen Bordnetzes,
Fig. 2 die schematische Darstellung eines solchen in einem Pkw angeordneten Bordnetzes ohne Endeinrichtungen,
Fig. 3 die schematische Darstellung eines Teilsystems, bestehend aus einer Busteilnehmerstation mit einer nachgeschalteten Schnittstelleneinrichtung,
Fig. 4 eine schematische Darstellung einer Busteilnehmerstation mit drei nachgeschalteten Schnittstelleneinrichtungen, deren Ein-/Ausgänge zu Gruppen zusammengefaßt sind,
   und
Fig. 5 den funktionellen Aufbau einer Busteilnehmerstation.

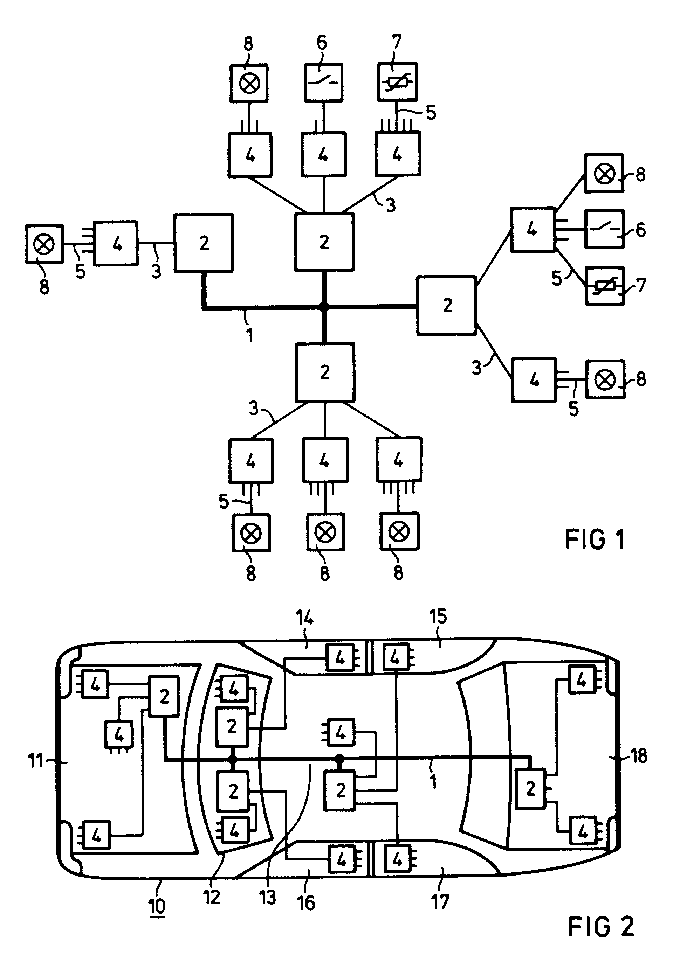

Gemäß Fig. 1 besteht das Bordnetz aus einer Busleitung 1 mit mehreren an diese Busleitung angeschlossenen Busteilnehmerstationen 2, denen sternförmig über Signalleitungen 3 jeweils eine oder mehrere Schnittstelleneinrichtungen 4 nachgeordnet sind. Den Schnittstelleneinrichtungen 4 sind über entsprechende Anschlußleitungen 5 sternförmig Endeinrichtungen zugeordnet, bei denen es sich um Schalter oder andere Bedienelemente und Anzeigeelemente 6, um Sensoren 7 und um Aktoren und Verbraucher 8 handelt.

Fig. 2 zeigt die Zuordnung eines solchen Bordnetzes zu einem Personenkraftwagen 10, der aus einem Frontbereich 11 mit dem Motorraum, Scheinwerfern und beispielsweise Scheibenwischern, dem Armaturenbrett 12 und einer Mittelkonsole 13, den rechten Türen 14 und 15, den linken Türen 16 und 17 und dem Heckbereich 18 mit Kofferraum, Heckklappe sowie Heckscheibe und Rücklichtern besteht. Die Zuordnung des erfindungsgemäßen Bordnetzes ist dabei in der Weise erfolgt, daß die Busleitung 1 im wesentlichen im Bereich der Längsachse des Pkw und zusammen mit den Busteilnehmerstationen 2 innerhalb der nicht näher bezeichneten formsteifen Zone des Pkw angeordnet sind. Die Zuordnung ist im Einzelnen so vorgenommen, daß eine Busteilnehmerstation 2 mit zwei nachgeschalteten Schnittstelleneinrichtungen 4 dem Frontbereich 11 zugeordnet ist, eine Busteilnehmerstation mit drei nachgeschalteten Schnittstelleneinrichtungen dem rechten Bereich des Armaturenbrettes 12 und der vorderen Tür 14, auf der rechten Pkw-Seite, eine weitere Busteilnehmerstation mit zwei nachgeordneten Schnittstelleneinrichtungen dem linken Bereich des Armaturenbrettes 12 einschließlich der Lenksäule und der vorderen Tür 16 auf der linken Pkw-Seite, eine weitere Busteilnehmerstation mit drei nachgeordneten Schnittstelleneinrichtungen der Mittelkonsole des Pkw und damit den beiden Vordersitzen sowie der hinteren rechten Tür 15 und der hinteren linken Tür 17, und eine letzte Busteilnehmerstation mit zwei nachgeschalteten Schnittstelleneinrichtungen dem Heckbereich 18.

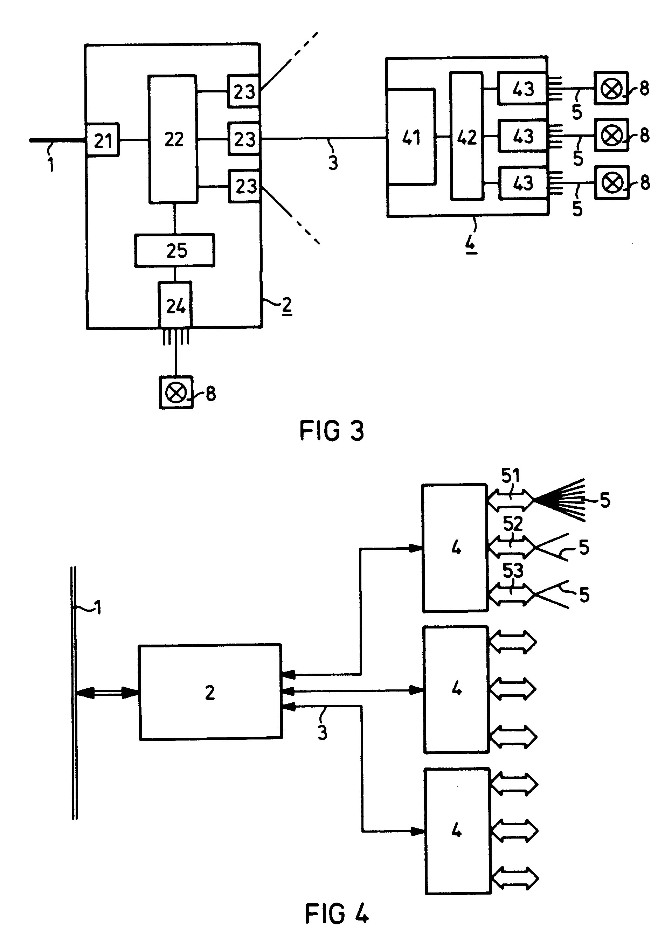

Gemäß Fig. 3 enthält jede Busteilnehmerstation 2 eine zentrale Datenverarbeitungseinheit 22, mit der einerseits der Sender/Empfänger 21 für den Datenverkehr auf der Busleitung 1 und andererseits drei Sender/Empfänger 23 für die Kommunikation der Busteilnehmerstation 2 mit zugehörigen Schnittstelleneinrichtungen 4 verbunden sind. Ausgehend von den Sendern/Empfängern 23 ist die Busteilnehmerstation über Signalleitungen 3 mit drei Schnittstelleneinrichtungen 4 verbunden, von denen in der Figur nur eine dargestellt ist. Die Schnittstelleneinrichtung 4 enthält einen Sender/Empfänger 41 für die Kommunikation mit der Busteilnehmerstation 2, einen Datenaufbereiter 42 und drei dem Datenaufbereiter nachgeschaltete Signalumsetzer 43. An diese Signalumsetzer 43 sind die Endeinrichtungen 6, 7 und 8 über entsprechende Zuleitungen angeschlossen. Die Signalumsetzer 43 dienen zur Umsetzung der physikalischen Signale der Endeinrichtungen, wie Spannung und Strom, in eine geeignete interne Darstellung und umgekehrt. Diese Umsetzung der Signale bzw. Daten erfolgt mit Hilfe elektronischer Bauelemente, wie beispielsweise Transistoren und integrierter Schaltkreise. -Der Datenaufbereiter 42 dient zur Formierung, beispielsweise zur Entprellung, und zur Gruppierung der von den Endeinrichtungen kommenden Signale und zur Aufschlüsselung und Verteilung sowie zur Fehlerüberwachung der von der Busteilnehmerstation 2 kommenden Signale. Bei diesem Datenaufbereiter handelt es sich um einen handelsüblichen Ein-Chip-Mikrocomputer, der gleichzeitig den Funktionsablauf des Senders/Empfängers 41 und die Signalumsetzer 43 steuert.

Um an die Busteilnehmerstation 2 im Bedarfsfall direkt Endeinrichtungen anschließen zu können, beispielsweise einen Sensor 7, ist diese ebenfalls mit einem Signalumsetzer 24 und einem Datenaufbereiter 25 versehen. Weiterhin ist in die zentrale Datenverarbeitungseinheit 22 ein Adressenumsetzer integriert, der die Umsetzung der lokalen, baugruppenspezifischen Adressen in funktionsorientierte Adressen und umgekehrt vornimmt.

Gemäß der Darstellung in Fig. 4 sind die den Endeinrichtungen zugeordneten Ein- und Ausgänge der einer Busteilnehmerstation 2 nachgeordneten Schnittstelleneinrichtungen 4 gruppenweise derart zusammengefaßt, daß jeweils drei Gruppen zu jeweils maximal acht Ein- oder Ausgängen gebildet sind. Unter Berücksichtigung der verschiedenen Endeinrichtungen empfiehlt es sich dabei, eine dieser Gruppen denjenigen Endeinrichtungen zuzuordnen, die analoge Signale empfangen oder abgeben und zwei Gruppen denjenigen Endeinrichtungen zuzuordnen, die digitale Signale empfangen und/oder abgeben. Gegebenenfalls können aber auch alle drei Gruppen zu je acht digitalen Ein-/Ausgängen vorgesehen sein. In der Zeichnung sind die Gruppenausgänge durch Doppelpfeile dargestellt. Die nicht näher dargestellten Endeinrichtungen sind über die Zuleitungen 5 mit den Gruppenausgängen verbunden.

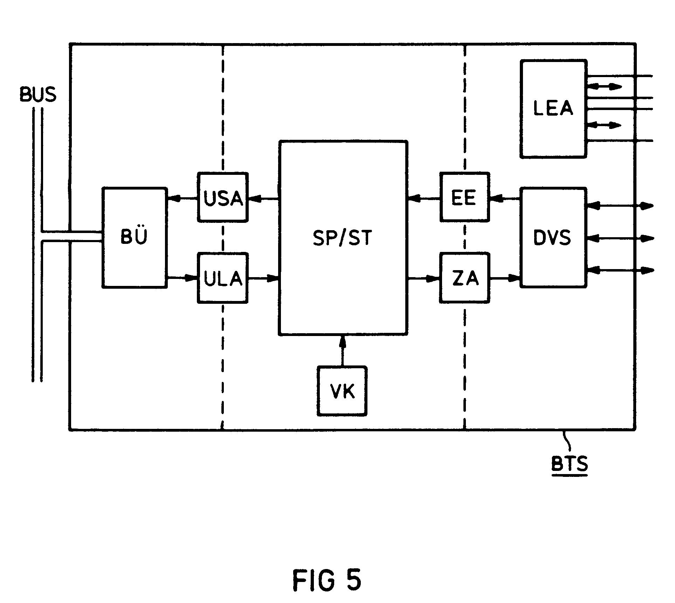

Der funktionale Aufbau einer Busteilnehmerstation gemäß Fig. 5 beruht hardwaremäßig im wesentlichen auf einer zentralen Datenverarbeitungseinheit, die aus einem Ein-Chip-Mikro Computer und einem Speicher besteht. In dem Speicher des Ein-Chip-Mikrocomputers und/oder in einem externen Speicher werden die Systemdaten, d. h. die Informationen bezüglich der Konfiguration des Bordnetzes - z. B. welche Adressen für die jeweilige Busteilnehmerstation von Interesse sind - weiterhin die Ein-und Ausgangszustände der dieser Busteilnehmerstation zugeordneten Endeinrichtungen, ferner die globalen Zustände des Bordnetzes, also die für die jeweilige Busteilnehmerstation relevanten Informationen von anderen Busteilnehmerstationen, und die Steuervariablen für die Aufbereitung und Weitergabe und gegebenenfalls die Verknüpfung der Daten gespeichert.

Die Verbindung einer Busteilnehmerstation BTS mit der Busleitung BUS basiert auf einer "wired-and" verknüpften Ankopplung mit einer Übertragungsrate von etwa 10 kBd mittels der Busübertragung BÜ. Die Busübertragung BÜ umfaßt das Empfangen und Senden der Daten sowie die Kollisionserkennung. - Empfangene Daten werden einer Umsetzung der logischen Adressen in systemspezifische Adressen unterzogen (ULA) und der zentralen Speicherung und Steuerung SP/ST zugeführt. Soweit erforderlich, werden sie mit bereits gespeicherten Daten verknüpft (VK). Sie werden dann im Hinblick auf die der Busteilnehmerstation nachgeschalteten Schnittstelleneinrichtungen zusammengestellt (ZA) und für die Übertragung zu den Schnittstelleneinrichtungen aufbereitet (DVS). Von dort erfolgt die weitere Übertragung der Signalwerte zu den Schnittstelleneinrichtungen mit einer gegenüber der Busleitung reduzierten Übertragungsrate von etwa 3 bis 4 kBd.

Von den Schnittstelleneinrichtungen an die Busteilnehmerstation gesendete Signalwerte werden aufgenommen (DVS) und für die Übernahme und den Eintrag durch die zentrale Speicherung und Steuerung SP/ST aufbereitet (EE). Nach entsprechender Verarbeitung werden sie unter Ermittlung der höchst priorisierten Nachricht zum Senden auf die Busleitung zusammengestellt (USA), wobei eine Umsetzung der systemspezifischen Adressen in logische Adressen erfolgt, und der Busübertragung BÜ zugeführt.

Signalwerte von Endeinrichtungen, die der Busteilnehmerstation direkt zugeordnet sind, werden über eine lokale Ein-/Ausgabe (LEA) direkt in den Datenfluß der Busteilnehmerstation integriert.

Bei dem beschriebenen Bordnetz kann die Übertragung auf der Busleitung durch einen Kurzschluß vollständig außer Betrieb gesetzt werden. Um dem vorzubeugen, kann parallel zu der Busleitung eine Ersatzbusleitung vorgesehen sein, die zusammen mit nur dieser Ersatzbusleitung zugeordneten Sendern/Empfängern in den einzelnen Busteilnehmerstationen einen eingeschränkten Betrieb des Bordnetzes ermöglicht. Dadurch ist gewährleistet, daß das Kraftfahrzeug beispielsweise nach einem leichten Unfall noch betriebsfähig ist.

## Patentansprüche

1. Bordnetz für Kraftfahrzeuge mit einer Multiplexsteuerung zum Schalten, Steuern und Überwachen elektrischer Endeinrichtungen (6,7,8), bestehend aus einer Busleitung (1), aus mehreren an die Busleitung (1) angeschlossenen Busteilnehmerstationen (2) und aus den Busteilnehmerstationen (2) zugeordneten peripheren Endeinrichtungen (6,7,8), wobei die Busteilnehmerstationen (2) zur Kommunikation untereinander jeweils mit einem Sender und einem Empfänger (21) zum Austausch von Datensignalen ausgestattet sind
**dadurch gekennzeichnet,**
a) daß zwischen den Busteilnehmerstationen (2) und den peripheren Endeinrichtungen (6,7,8) Schnittstelleneinrichtungen (4) angeordnet sind, wobei jeweils mehrere Endeinrichtungen sternförmig einer Schnittstelleneinrichtung (4) zugeordnet sind und jeweils eine oder mehrere Schnittstelleneinrichtungen (4) ebenfalls sternförmig über jeweils eine Signalleitung (3) einer Busteilnehmerstation (2) zugeordnet sind,
b) daß jede Schnittstelleneinrichtung (4) mit Signalumsetzern (43) zur Erfassung binärer und/oder analoger Signalwerte der Endeinrichtungen (6,7,8) und zur Ausgabe binärer und/oder analoger Signalwerte an die Endeinrichtungen (6,7,8) versehen ist
c) und daß jede Schnittstelleneinrichtung (4) mit einem Sender und Empfänger (41) zum Austausch von Daten mit der zugehörigen Busteilnehmerstation (2) und jede Busteilnehmerstation (2) mit Sendern und Empfängern (21) zum Austausch von Daten mit den zugehörigen Schnittstelleneinrichtungen (4) über jeweils eine Signalleitung (3) versehen ist.

2. Bordnetz nach Anspruch 1, **dadurch gekennzeichnet,**
daß jede Schnittstelleneinrichtung (4) einen Datenaufbereiter (42) zur Vor- und Nachbearbeitung der von der zugehörigen Busteilnehmerstation (2) zu empfangenden oder an die zugehörige Busteilnehmerstation weiterzugebenden Daten aufweist.

3. Bordnetz nach Anspruch 1 oder 2, **dadurch gekennzeichnet,**
daß die den Endeinrichtungen (6,7,8) zugeordneten Eingänge bzw. Ausgänge der Schnittstelleneinrichtungen (4) jeweils zu einer oder mehreren Gruppen (51,52,53) gleichen Typs zusammengefaßt sind
und daß jede Busteilnehmerstation (2) eine Steuereinrichtung zur zyklischen Übertragung der Daten von und zu den zugehörigen Schnittstelleneinrichtungen in der Reihenfolge der Gruppen von Ein- und Ausgängen der jeweiligen Schnittstelleneinrichtung enthält.

4. Bordnetz nach Anspruch 3, **dadurch gekennzeichnet,** daß eine oder mehrere Busteilnehmerstationen (2) zusätzlich einen Signalumsetzer (24) zum direkten Erfassen oder zur direkten Ausgabe von binären und/oder analogen Signalwerten von bzw. an Endeinrichtungen sowie einen Datenaufbereiter (25) aufweisen.

5. Bordnetz nach einem der Ansprüche 1 bis 4, **dadurch gekennzeichnet,** daß jede Busteilnehmerstation (2) einen Adressenumsetzer zur logischen Umsetzung der lokalen Adressen der Endeinrichtungen in globale, funktionsorientierte Adressen und umgekehrt enthält.

6. Bordnetz nach einem der Ansprüche 1 bis 5, **dadurch gekennzeichnet,** daß die Busteilnehmerstationen (2) Steuerungs- und/oder Verknüpfungselemente enthalten, mit denen binäre und/oder digitale Daten, die den Signalwerten beliebiger Endeinrichtungen entsprechen, logisch miteinander verknüpfbar sind.

7. Bordnetz nach einem der Ansprsüche 1 bis 6, **dadurch gekennzeichnet,** daß einer Busteilnehmerstation (2) maximal drei Schnittstelleneinrichtungen (4) zugeordnet sind und daß eine Schnittstelleneinrichtung maximal 24 Ein-/Ausgänge zu Endeinrichtungen (5,6,7) aufweist.

8. Bordnetz nach einem der Ansprüche 1 bis 7 für ein Kraftfahrzeug mit wenigsten einer formsteifen Zone und mit leichter verformbaren Zonen und mit im Bereich der Karosserie und des Fahrzeugbodens angeordneten peripheren Endeinrichtungen,
**dadurch gekennzeichnet,**
daß die Busleitung und die Busteilnehmerstationen (2) im Bereich der Kfz-Längsachse innerhalb der formsteifen Zone angeordnet sind und daß die Schnittstelleneinrichtungen (4) im Bereich der Karosserie bzw. des Fahrzeugbodens angeordnet sind.

9. Bordnetz nach einem der Ansprüche 1 bis 8, **dadurch gekennzeichnet,** daß die Schnittstelleneinrichtungen (4) bestimmten Karosseriebereichen wie Türen (14,15,16, 17), Frontbereich (11), Heckbeleuchtung (18), Armaturenbrett (12) oder Mittelkonsole (13) mit Bedienelementen, Fahrzeugsitz, Klimaanlage usw. zugeordnet sind.

10. Verfahren zum Betrieb eines Bordnetzes nach einem der Ansprüche 1 bis 9,
**dadurch gekennzeichnet,**
daß jede Busteilnehmerstation (2) die von den Signalumsetzern (43) der zugehörigen Schnittstelleneinrichtungen (4) bereitgestellten und gegebenenfalls die von den eigenen Signalumsetzern (24) bereitgestellten und mittels der Steuerungs- und Verknüpfungselemente gegebenenfalls miteinander verknüpften Signale sowie innere Systemzustände der Busteilnehmerstationen (2) und der Schnittstelleneinrichtungen (4) nach einem zyklischen Verfahren auf die Busleitung (1) gibt und jeweils bei Änderung des zu übermittelnden Zustandes den Zyklus durchbricht und den geänderten Zustand überträgt.

11. Verfahren zum Betrieb eines Bordnetzes, insbesondere nach einem der Ansprüche 1 bis 9, bei dem von einer Busteilnehmerstation (2) Daten zyklisch an die zugehörigen Schnittstelleneinrichtungen (4) übertragen werden bzw. Daten von diesen Schnittstelleneinrichtungen (4) an die Busteilnehmerstation (2) übermittelt werden,
**dadurch gekennzeichnet,** daß die Schnittstelleneinrichtungen (4) zur Übermittlung eines zeitkritischen Datums an die zugehörige Busteilnehmerstation (2) an vorbestimmten Stellen des Übertragungszyklus ein Signal abgeben können, das zur Unterbrechung des Übertragungszyklus führt.

12. Verfahren nach Anspruch 11, **dadurch gekennzeichnet,** daß jede Busteilnehmerstation (2) die von den Signalumsetzern (43) der zugehörigen Schnittstelleneinrichtungen (4) bereitgestellten und gegebenenfalls die von den eigenen Signalumsetzern (24) bereitgestellten und mittels der Steuerungs- und Verknüpfungselemente gegebenenfalls miteinander verknüpften Signale sowie innere Systemzustände der Busteilnehmerstationen (2) und der Schnittstelleneinrichtungen (4) nach einem zyklischen Verfahren auf die Busleitung (1) gibt und jeweils bei Änderung des zu übermittelnden Zustandes den Zyklus durchbricht und den geänderten Zustand überträgt.

## Claims

1. Onboard electrical system for motor vehicles having a multiplex control for switching, controlling and monitoring electrical terminal devices (6,7,8), comprising a bus line (1), consisting of several bus user stations (2) attached to the bus line (1) and consisting of peripheral terminal devices (6,7,8) associated with the bus user stations (2), whereby the bus user stations (2), for communication with one another, are in each case equipped with a transmitter and a receiver (21) for the exchange of data signals, characterized
a) in that interface devices (4) are arranged between the bus user stations (2) and the peripheral terminal devices (6,7,8), whereby in each case several terminal devices are associated in star form with an interface device (4) and in each case one or more interface devices (4) are likewise associated in a star form with a bus user station (2) by way of a signal line (3) in each case,
b) in that each interface device (4) is provided with signal transducers (43) for the detection of binary and/or analog signal values of the terminal devices (6,7,8) and for the emission of binary and/or analog signal values to the terminal devices (6,7,8)
c) and in that each interface device (4) is provided with a transmitter and receiver (41) for the exchange of data with the relevant bus user station (2) and each bus user station (2) is provided with transmitters and receivers (21) for the exchange of data with the relevant interface devices (4) by way of a signal line (3) in each case.

2. Onboard electrical system according to claim 1, characterized in that each interface device (4) has a data preparer (42) for the preparation and reworking of the data to be received by the relevant bus user station (2) or to be relayed to the relevant bus user station.

3. Onboard electrical system according to claim 1 or 2, characterized in that the inputs or outputs of the interface devices (4) associated with the terminal devices (6,7,8) are in each case combined into one or more groups (51,52,53) of the same type and in that each bus user station (2) contains a control device for the cyclical transmission of the data from and to the relevant interface devices in the sequence of groups of inputs and outputs of the respective interface device.

4. Onboard electrical system according to claim 3, characterized in that one or more bus user stations (2) additionally have a signal transducer (24) for the direct detection or for the direct emission of binary and/or analog signal values from and to terminal devices as well as a data preparer (25).

5. Onboard electrical system according to one of claims 1 to 4, characterized in that each bus user station (2) contains an address converter for the logical conversion of the local addresses of the terminal devices into global, function-oriented addresses and vice versa.

6. Onboard electrical system according to one of claims 1 to 5, characterized in that the bus user stations (2) contain control and/or linking elements, by which binary and/or digital data, which correspond with the signal values of any terminal devices, can be linked to one another logically.

7. Onboard electrical system according to one of claims 1 to 6, characterized in that a maximum of three interface devices (4) are associated with a bus user station (2) and in that an interface device has a maximum of 24 inputs/outputs to terminal devices (5,6,7).

8. Onboard electrical system according to one of claims 1 to 7 for a motor vehicle with at least one dimensionally stable zone and with zones which can be deformed more easily and with peripheral terminal devices arranged in the region of the body and the floor of the vehicle, characterized in that the bus line and the bus user stations (2) are arranged in the region of the longitudinal axis of the motor vehicle within the dimensionally stable zone and in that the interface devices (4) are arranged in the region of the body or the floor of the vehicle.

9. Onboard electrical system according to one of claims 1 to 8, characterized in that the interface devices (4) are associated with certain body regions like doors (14,15,16,17), front region (11), rear lighting (18), dashboard (12) or middle console (13) with operating elements, vehicle seat, air-conditioning equipment etc..

10. Method for the operation of an onboard electrical system according to one of claims 1 to 9, characterized in that each bus user station (2) delivers to the bus line (1), according to a cyclical method, the signals prepared by the signal transducers (43) of the relevant interface devices (4), perhaps the signals prepared by the particular signal transducers (24) and signals perhaps linked to one another by means of the control and linking elements as well as internal system states of the bus user stations (2) and the interface devices (4), and in each case, upon change of the state to be transmitted, the bus user station interrupts the cycle and transmits the altered state.

11. Method for the operation of an onboard electrical system, in particular according to one of claims 1 to 9, in which data from a bus user station (2) is cyclically transmitted to the relevant interface devices (4) or data from these interface devices (4) is transmitted to the bus user station (2), characterized in that the interface devices (4), for the transmission of a time-critical datum to the relevant bus user station (2), can emit at predetermined points of the transmission cycle a signal which leads to the interruption of the transmission cycle.

12. Method according to claim 11, characterized in that each bus user station (2) delivers to the bus line (1), according to a cyclical method, the signals prepared by the signal transducers (43) of the relevant interface devices (4), perhaps the signals prepared by the particular signal transducers (24) and signals perhaps linked to one another by means of the control and linking elements as well as internal system states of the bus user stations (2) and the interface devices (4), and in each case, upon change of the state to be transmitted, the bus user station interrupts the cycle and transmits the altered state.

## Revendications

1. Réseau de bord pour véhicule automobile, comportant une unité de commande multiplex pour commuter, commander et contrôler des terminaux électriques (6,7,8), constitué par une ligne formant bus (1), par plusieurs postes d'abonnés (2) du bus raccordés à la ligne formant bus (1) et par des terminaux (6,7,8) associés aux postes d'abonnés (2) du bus, les postes d'abonnés (2) du bus étant équipés, pour communiquer entre eux, respectivement d'un émetteur et d'un récepteur (21) pour échanger des signaux de données,
caractérisé par le fait
a) que des dispositifs d'interface (4) sont disposés entre les postes d'abonnés (2) du bus et les terminaux périphériques (6,7,8), respectivement plusieurs terminaux étant associés, selon une disposition en étoile, à un dispositif d'interface (4), et respectivement un ou plusieurs dispositifs d'interface (4) étant également associés, selon une disposition en étoile, par l'intermédiaire respectivement d'une ligne de transmission de signaux (3), à un poste d'abonné (2) du bus,
b) que chaque dispositif d'interface (4) est équipé de convertisseurs de signaux (43) servant à détecter des valeurs de signaux binaires et/ou analogiques des terminaux (6,7,8) et à délivrer des valeurs de signaux binaires et/ou analogiques aux terminaux (6,7,8), et
c) que chaque dispositif d'interface (4) est pourvu d'un émetteur et d'un récepteur (41) pour échanger des données avec le poste d'abonné associé (2) du bus et que chaque poste d'abonné (2) du bus est pourvu d'émetteurs et de récepteurs (21) pour échanger des données avec les dispositifs d'interface associés (4) par l'intermédiaire respectivement d'une ligne de transmission de signaux (3).

2. Réseau de bord selon la revendication 1, caractérisé en ce que chaque dispositif d'interface (4) possède un dispositif de préparation de données (42) servant à réaliser le prétraitement et le post-traitement des données devant être reçues par le poste d'abonné associé (2) du bus ou de données devant être retransmises au poste d'abonné associé du bus.

3. Réseau de bord suivant la revendication 1 ou 2, caractérisé par le fait
que les entrées et sorties, associées aux terminaux (6,7,8), des dispositifs d'interface (4) sont rassemblées respectivement en un ou plusieurs groupes (51,52,53) de même type, et
que chaque poste d'abonné (2) du bus comporte un dispositif de commande pour la transmission cyclique des données à partir et en direction des dispositifs d'interface associés, dans la succession des groupes d'entrée et de sortie du dispositif d'interface respectif.

4. Réseau de bord suivant la revendication 3, caractérisé par le fait qu'un ou plusieurs postes d'abonnés du bus comporte en outre un convertisseur de signaux (24) servant à détecter directement ou à délivrer directement des valeurs de signaux binaires et/ou analogiques en provenance ou en direction de terminaux, ainsi qu'un dispositif de préparation de données (25).

5. Réseau de bord suivant l'une des revendications 1 à 4, caractérisé par le fait que chaque poste d'abonné (2) du bus comporte un convertisseur d'adresses servant à réaliser la conversion logique des adresses locales des terminaux en des adresses globales axées sur des fonctions, et inversement.

6. Réseau de bord suivant l'une des revendications 1 à 5, caractérisé par le fait que les postes d'abonnés (2) du bus comportent des éléments de commande et/ou de combinaison, au moyen desquels les données binaires et/ou numériques, qui correspondent aux valeurs de signaux de terminaux quelconques, peuvent être combinées logiquement entre elles.

7. Réseau de bord suivant l'une des revendications 1 à 6, caractérisé par le fait qu'au maximum trois dispositifs d'interface (4) sont associés à un poste d'abonné (2) du bus et qu'un dispositif d'interface comporte au maximum 24 entrées/sortie de liaison à des terminaux (5,6,7).

8. Réseau de bord suivant l'une des revendications 1 à 7 pour un véhicule automobile comportant au moins une zone de forme stable et des zones plus facilement déformables et des terminaux périphériques disposés au niveau de la carrosserie et du plancher du véhicule, caractérisé par le fait que la ligne formant bus et les postes d'abonnés (2) du bus sont disposés au voisinage de l'axe longitudinal du véhicule, à l'intérieur de la zone de forme stable, et que les dispositifs d'interface (4) sont disposés dans la zone de la carrosserie du plancher du véhicule.

9. Réseau de bord suivant l'une des revendications 1 à 8, caractérisé par le fait que les dispositifs d'interface (4) sont associés à des parties déterminées de la carrosserie telles que des portes (14,15,16,17), la partie avant (11), l'éclairage arrière (18), le tableau de bord (12) ou une console (73) comportant des éléments de commande, le siège du véhicule, l'installation de climatisation, etc.

10. Procédé pour faire fonctionner un réseau de bord suivant l'une des revendications 1 à 9, caractérisé par le fait
que chaque poste d'abonné (2) du bus envoie les signaux préparés par les convertisseurs de signaux (43) des dispositifs d'interface associés (4) et éventuellement les signaux préparés par les convertisseurs de signaux proprement dits (24) et éventuellement combinés entre eux au moyen des éléments de commande et de combinaison, ainsi que des états internes du système des postes d'abonnés (2) du bus et des dispositifs d'interface (4) selon un procédé cyclique à la ligne formant bus (1) et, respectivement, lors d'une modification de l'état à transmettre, interrompt le cycle et transmet l'état modifie.

11. Procédé pour faire fonctionner un réseau de bord, notamment suivant l'une des revendications 1 à 9, selon lequel des données sont transmises cycliquement par un poste d'abonné (2) du bus aux dispositifs associés d'interface (4) ou des données sont transmises par ces dispositifs d'interface (4) au poste d'abonné (2) du bus, caractérisé par le fait que pour la retransmission d'une donnée critique du point de vue temps au poste d'abonné associé (2) du bus, les dispositifs d'interface (4) peuvent délivrer, en des points prédéterminés du cycle de transmission, un signal qui déclenche l'interruption du cycle de transmission.

12. Procédé suivant la revendication 11, caractérisé par le fait que chaque poste d'abonné (2) du bus envoie les signaux préparés par les convertisseurs de signaux (43) des dispositifs d'interface associés (4) et éventuellement les signaux préparés par les convertisseurs de signaux proprement dits (24) ou éventuellement combinés entre eux au moyen des éléments de commande et de combinaison, ainsi que des états internes du système des postes d'abonnés (2) du bus et des dispositifs d'interface (4) selon un procédé cyclique, à la ligne formant bus (1) et, respectivement lors d'une modification de l'état devant être transmis, interrompt le cycle et transmet l'état modifié.
